# EUROPÄISCHE PATENTSCHRIFT

(11) **EP 1 049 737 B1**
(45) Veröffentlichungstag und Bekanntmachung des Hinweises auf die Patenterteilung: **31.07.2002**
(21) Anmeldenummer: 99907384.4
(22) Anmeldetag: 19.01.1999
(51) Int. Cl.: C08J 3/16, C08F 6/24

(54) **VERFAHREN ZUM FÄLLEN VON MIKROSUSPENSIONSPOLYMERISATEN**
METHOD FOR PRECIPITATING MICROSUSPENSION POLYMERS
PROCEDE DE PRECIPITATION DE POLYMERISATS EN MICROSUSPENSION

(30) Priorität: 21.01.1998 DE 19802121
(43) Veröffentlichungstag der Anmeldung: 08.11.2000
(73) Patentinhaber: BASF AKTIENGESELLSCHAFT, 67056 Ludwigshafen (DE)
(72) Erfinder: MC KEE, Graham, Edmund, D-67433 Neustadt (DE); CZAUDERNA, Bernhard, D-69493 Hirschberg (DE); HEINEN, Hartmut, D-68163 Mannheim (DE); KOCH, Jürgen, D-67141 Neuhofen (DE)
(74) Vertreter: Isenbruck, Günter, Dr.
(86) Internationale Anmeldenummer: EP9900306
(87) Internationale Veröffentlichungsnummer: WO9937703

(56) Entgegenhaltungen:
- EP-A- 0 510 805
- WO-A-99/03912
- DD-A- 210 697
- DE-A- 3 921 299

## Beschreibung

Die Erfindung betrifft ein Verfahren zum Fällen von Mikrosuspensionspolymerisaten, die so gefällten Polymerisate, deren Verwendung zur Modifizierung von Formmassen und diese enthaltende Formmassen.

Zur Herstellung von kleinteiligen Polymerisatteilchen, die insbesondere als Kautschukkomponente in Polymerblends Verwendung finden, sind unterschiedliche Verfahren bekannt.

Beispielsweise können die Polymerteilchen nach dem Mikrosuspensionsverfahren hergestellt werden. Dabei wird ein flüssiges Monomer beziehungsweise flüssiges Monomergemisch, das zum teilchenförmigen Polymer polymerisiert werden soll, mit Wasser und einem Schutzkolloid vermischt. Der vorzugsweise wasserunlösliche Polymerisationsinitiator wird bereits zu diesem Zeitpunkt oder erst nach dem Dispergieren der Monomere, gegebenenfalls auch nach dem Aufheizen der Dispersion, zugegeben. Aus dem heterogenen Gemisch wird durch intensives Rühren bei hoher Geschwindigkeit unter starker Scherung eine Dispersion kleinster Monomertröpfchen in Wasser hergestellt. Hierzu werden Intensivmischer beliebiger Bauart eingesetzt. Die Polymerisation wird durch Erhitzen der Dispersion gestartet und unter mäßigem Rühren, bei dem die Tröpfchen nicht mehr weiter zerteilt werden, so lange fortgesetzt. bis ein gewünschter Umsatz erreicht ist. Durch zeitlich abgestimmte Zugabe unterschiedlicher Monomere können Kern-Schale-Polymerteilchen erhalten werden, sogenannte Pfropfpolymere. Die für die Stabilisierung der Dispersion eingesetzten Schutzkolloide sind in der Regel wasserlösliche Polymere, die die Monomertröpfchen und die daraus gebildeten Polymerteilchen umhüllen und auf diese Weise vor der Koagulation schützen.

Die Herstellung von teilchenförmigen Mikrosuspensionspolymerisaten ist beispielsweise in der DE-A-44 43 886 beschrieben.

Sollen die erhaltenen Mikrosuspensionspolymerisate zur Modifizierung von Polymerformmassen eingesetzt werden, so werden sie häufig als wäßrige Dispersion unter Erhitzen in die Polymere eingearbeitet, wobei das Dispergiermittel verdampft. Eine Fällung der Polymerdispersion ist schwierig durchzuführen, da übliche, für Emulsionspolymerisate eingesetzte Fällungsmittel unwirksam sind.

Ein Verfahren zur Herstellung von festen Mikrosuspensionspolymerisaten ist die Sprühtrocknung. Bei diesem kostspieligen Verfahren verbleiben jedoch sämtliche in der Dispersion enhaltenen Hilfsstoffe im sprühgetrockneten Produkt. Dies kann zur Bildung von Stippen, zur Verfärbung oder zur frühzeitigen Alterung führen.

DE-A-39 21 299 betrifft ein Verfahren zur Herstellung einer sinterfähigen, feinteiligen Formmasse auf der Basis von Polyvinylchlorid. Dabei wird Vinylchlorid in einer Suspensionspolymerisation in Gegenwart eines Suspensionsstabilisators (Kolloids) und eines Emulgators unter Verwendung eines öllöslichen Radikalbildners polymerisiert. Nachdem mindestens 70 Gew.-% des eingesetzten Vinylchlorids polymerisiert sind, wird in das wäßrige Reaktionssystem ein Polyvinylchlorid-Latex eingetragen, der durch Emulsions- oder Mikrosuspensionspolymerisation erhalten wird, und der einen Emulgator enthält. Durch die Zugabe dieses Latex koaguliert das vorliegende Polymerisat, worauf die Hauptmenge der wäßrigen Phase abgetrennt und die Polymerisationsmischung getrocknet wird. Die mittlere Korngröße der erhaltenen Teilchen wird mit 10 bis 50 µm angegeben. Als Suspensionsstabilisator werden vorzugsweise Zellulosether oder wasserlösliche, teilverseifte Polyvinylacetate eingesetzt. Zur Koagulation des Latex kann zudem auch ein wasserlösliches Salz eines mehrwertigen Metalles verwendet werden. Es werden insbesondere die Chloride, sauren Phosphate sowie Nitrate des Kalziums, Aluminiums und Bariums sowie die Sulfate des Kalziums und Aluminiums genannt. Als Emulgator werden Alkyl-, Arylsulfonsäuren genannt.

EP-A-0 510 805 betrifft nicht-agglomerierende Suspensionspolymere. Zu ihrer Herstellung wird eine wäßrige Suspension eines Polymers mit einer Glasübergangstemperatur von weniger als 50°C nach dem wäßrigen Suspensionspolymerisationsverfahren hergestellt. Die Untergrenze für die Glasübergangstemperatur wird dabei mit 5°C angegeben. Sodann wird die wäßrige Suspension mit einem Emulsionspolymer mit einer Glasübergangstemperatur von mehr als 50°C kombiniert, wobei das Emulsionspolymer eine antiblockierende Beschichtung auf dem Suspensionspolymer bildet. Sodann werden die beschichteten Teilchen des Suspensionspolymers aus dem wäßrigen Medium isoliert. Es wird nicht angegeben, daß das Emulsionspolymer zum Fällen des Suspensionspolymers eingesetzt wird. Die Isolierung der Teilchen erfolgt durch Filtration. Weitere Hinweise auf das Isolierungsverfahren fehlen.

Aufgabe der vorliegenden Erfindung ist die Bereitstellung eines Verfahrens zum Fällen von Mikrosuspensionspolymerisaten aus einer diese enthaltenden Suspension.

Die Aufgabe wird erfindungsgemäß gelöst durch ein Verfahren zum Fällen von Mikrosuspensionspolymerisaten mit den Merkmalen von Anspruch 1 aus einer diese enthaltenden Suspension, wobei die Suspension mit einer durch Emulsionspolymerisation hergestellten Polymerdispersion versetzt wird.

Die Suspension kann zudem zusätzlich mit einem Fällmittel für die Polymerdispersion versetzt werden. Dabei kann zunächst die Suspension mit der Polymerdispersion vermischt und dann mit dem Fällmittel versetzt werden, oder die Suspension kann mit dem Fällmittel gemischt und sodann mit der Polymerdispersion versetzt werden.

Es wurde erfindungsgemäß gefunden, daß beim Zusatz einer durch Emulsionspolymerisation hergestellten Polymerdispersion Mikrosuspensionspolymerisate gefällt werden können.

Bei der Emulsionspolymerisation handelt es sich um ein heterogenes Reaktionsverfahren, bei dem ungesättigte Monomere oder Monomerlösungen in einer kontinuierlichen Phase, in der Regel Wasser, mit Hilfe eines Emulgatorsystems emulgiert werden und mit freie Radikale bildenden Initiatoren polymerisiert werden. Die freie Radikale bildenden Initiatoren sind dabei vorzugsweise wasserlöslich. Als Produkt wird eine kolloidale Dispersion des Polymers oder der Polymerlösung, ein sogenannter Latex, erhalten. Bei der Umsetzung bildet das Emulgatorsystem Micellen, in die die zumindest teilweise wasserlöslichen Monomere aus den emulgierten Monomertröpfchen durch die Wasserphase wandern. Mit Hilfe von in der Wasserphase enthaltenen Initiatoren wird die Polymerisation in den Micellen ausgelöst. Die eingesetzten Monomere müssen eine gewisse Wasserlöslichkeit aufweisen, um aus den Monomertröpfchen durch die wäßrige Phase in die Micellen wandern zu können. Als Monomere können dabei beispielsweise Styrol, Butadien, Acrylsäure, Vinylchlorid, Acrylnitril und andere eingesetzt werden. Ein entsprechendes Verfahren ist in der Encyclopedia of Polymer Science and Engineering, Band 6, Seite 1 (1986), John Wiley and Sons, New York, beschrieben.

Als Emulgatoren können dabei anionische, kationische, nichtionische oder amphotere oberflächenaktive Verbindungen, insbesondere Seifen eingesetzt werden. Vorzugsweise werden anionische oder kationische Seifen verwendet wie Salze langkettiger Carbonsäuren oder Sulfonsäuren. Beispiele sind Natrium-, Kalium- und Ammoniumsalze von C₁₂₋₃₀-Fettsäuren wie Stearin- und Ölsäure sowie die Salze von C₁₀₋₃₀-Sulfonaten, etwa Natriumalkylbenzolsulfonate (LAS) und ähnliche Verbindungen, die sich von Fettsäureresten ableiten. Ein besonders bevorzugtes Beispiel ist Natriumlaurylsulfat. Als kationische Seifen kommen insbesondere Salze langkettiger Amine oder Polyamine sowie quarternäre Ammoniumsalze oder Amine von langkettigen Polyoxyethylenen und deren quarternisierte Derivate, wie auch Aminoxide in Betracht. Geeignete Emulgatoren sind in "Emulsion Polymerisation and Emulsion Polymers, Ed. P. A. Lovell, M. S. El-Aasser, John Wiley and Sons, Chichester (1997), Seiten 224 bis 226 beschrieben. Es kann zudem auf die Encyclopedia of Polymer Science and Technology, Band 5, Seiten 816 bis 819 (1966), John Wiley and Sons verwiesen werden.

Die Emulgatoren werden bei der Herstellung der Emulsionspolymerisate in einer Menge von 0,1 bis 10 Gew.-%, vorzugsweise 0,15 bis 5 Gew.-%, besonders bevorzugt 0,2 bis 2,0 Gew.-%, bezogen auf die zu emulgierenden Monomere, eingesetzt. Als wasserlösliche Initiatoren kommen beispeilsweise Wasserstoffperoxid, Kalium-, Ammonium- und Natriumperoxid in Betracht.

Verfahren zur Herstellung der Emulsionspolymerisate und verwendbare Emulsionspolymerisate sind beispielsweise in DE-A-24 27 960, EP-A-0 125 483, EP-A-0 716 101, EP-A-0 576 960 beschrieben. Bevorzugt ist das Emulsionspolymerisat aus den gleichen Monomeren aufgebaut, die auch zur Herstellung der nachstehend beschriebenen Mikrosuspensionspolymerisate eingesetzt werden.

Emulsionspolymerisate können durch Zusatz geeigneter Fällmittel, die die Dispersion der Polymerteilchen zerstören, ausgefällt werden. Beispielsweise werden Elektrolyte wie Calciumchlorid oder Magnesiumsulfat zu den Dispersionen gegeben. Allgemein können Salze eingesetzt werden, die ein mehrwertiges Kation enthalten. Zudem können auch Säuren verwendet werden. Die Behandlung mit dem Fällmittel, das vorzugsweise als wäßrige Lösung eingesetzt wird, führt zu einer Koagulation der Polymerteilchen, die sodann vom Dispergiermittel, in der Regel Wasser, abgetrennt werden können. Eine entsprechende Vorgehensweise ist in DE-A-24 27 960 beschrieben.

Ebenso wie die Art des einzusetzenden Emulsionspolymerisates unkritisch ist und frei gewählt werden kann, ist auch die Art des erfindungsgemäß einzusetzenden Mikrosuspensionspolymerisates frei wählbar und nur dadurch beschränkt, daß es aus Polymeren mit einer Glasübergangstemperatur T_{g} von weniger als 0°C besteht bzw. bei mehreren Phasen zumindestens einige davon eine T_{g} < 0°C aufweisen. Geeignete Mikrosuspensionspolymerisate sind beispielsweise in DE-A-44 43 886 beschrieben.

Geeignet ist beispielsweise ein kautschukelastisches Mikrasuspensionspolymerisat A' mit einem mittleren Teilchendurchmesser von 0,08 bis 100 µm.

Der morphologische Aufbau der Teilchen kann beliebig gewählt werden, beispielsweise können die Teilchen eine einheitliche Zusammensetzung aufweisen oder aus einem Kern mit einer oder mehreren Pfropfhüllen bestehen. Die Teilchen können vernetzt oder unvernetzt sein und bestehen dabei aus Polymeren die eine Glasübergangstemperatur (T_{g}) von weniger als 0°C (kautschukhaltig). Es können auch - beispielsweise bei Teilchen mit einem Kern/Schale-Aufbau - mehrere Phasen vorliegen, in denen einige Phasen eine Glasübergangstemperatur von oberhalb 0°C und andere Phasen eine Glasübergangstemperatur von unterhalb 0°C aufweisen.

Als Monomere für die Herstellung der Mikrosuspensionspolymerisate (MSP) kommen als Monomere solche Monomere in Betracht, die sich mit freien Radikalen polymerisieren lassen. Beispiele derartiger Monomere sind C₁₋₃₆-Alkyl(meth)acrylate wie Butylacrylat und Ethylhexylacrylat, die zu weichen Polymeren führen, sowie Methylmethacrylat, Ethylacrylat und Methylacrylat. Weitere Monomere sind Styrol, Acrylnitril, α-Methylstyrol, wie auch ungesättigte Carbonsäuren wie (Meth)acrylsäure und ihre Derivate wie Glycidyl(meth)acrylat und (Meth)acrylamid. Weitere geeignete Monomere sind Diene wie Butadien oder Isopren, die gegebenenfalls substituiert sein können. Eine ausführliche Beschreibung geeigneter Monomere findet sich in Polymer Handbook, 3. Auflage, 1989, Herausgeber Wiley Int. Science.

Ein besonderer Typ geeigneter Monomere sind die sogenannten Vernetzer. Derartige bifunktionelle oder polyfunktionelle Comonomere sind beispielsweise die vorstehend beschriebenen Monomere Butadien und Isopren, dazu Vinylester von Dicarbonsäuren wie der Bernsteinsäure und Adipinsäure, die Allyl- und Divinylether bifunktioneller Alkohole wie dem Ethylenglycol und dem Butan-1,4-diol, die Ester der Acrylsäure und Methacrylsäure mit den genannten bifunktionellen Alkoholen sowie 1,4-Divinylbenzol und Triallylcyanurat. Besonders bevorzugt sind der Acrylester des Tricyclodienylalkohols (Dihydrodicyclopentadienylacrylat) sowie die Allylester der Acrylsäure und der Methacrylsäure. Weitere geeignete Vernetzer sind auch in Ullmann's Encyklopädie der technischen Chemie, 4. Auflage, Band 19, Seiten 1 bis 30 beschrieben.

Die erfindungsgemäßen Verbindungen werden erhalten in einem Verfahren zur Herstellung von Mikrosuspensions(pfropf)polymerisaten durch
(1) Dispergieren der dem Mikrosuspensionspolymerisat entsprechenden Monomere in Wasser unter Verwendung eines Schutzkolloides zu einer Dispersion mit einem mittleren Teilchendurchmesser von 0,08 bis 100 µm,
(2) Polymerisation der Tröpfchen mit einem hydrophoben radikalischen Polymerisationsinitiator
   und gegebenenfalls nach oder während der Stufe (2)
(3) Pfropfpolymerisation des in Stufe (2) erhaltenen Gemisches mit weiteren Monomeren.

Das Verfahren der Mikrosuspensionspolymerisation ist beispielsweise in EP-A-0 716 101 und DE-A-44 43 886 beschrieben.

Beim Mikrosuspensions-Verfahrcn werden Monomertröpfchen in Gegenwart eines Schutzkolloids unter hohen Scherkräften in einem wässrigen Medium suspendiert. Daraufhin werden sie radikalisch polymerisiert. Die erhaltenen Teilchengrößen betragen dabei erfindungsgemäß 0.08 bis 100 µm, vorzugsweise 0,15 bis 50 µm, besonders bevorzugt 0,2 bis 30 µm.

Die kautschukelastischen Mikrosuspensions(pfropf)polymerisate können einen Kern/Schale-Aufbau aufweisen oder als homogene Teilchen ausgeführt sein.

Die Pfropfhülle kann genauso wie der Kern aufgebaut sein und zumindest teilweise aus Monomeren kautschukelastischer Polymere aufgebaut sein. Der Aufbau der Pfropfpolymerisate kann mehrstufig sein, das heißt es können mehrere Pfropfhüllen vorliegen. Beispielsweise können neben einem weichen Kern eine harte Hülle, eine harte und eine weiche Hülle oder eine Abfolge harter und weicher Hüllen vorliegen. Beispiele für Monomere, die eine harte Phase ergeben, sind Styrol, α-Methylstyrol, Acrylnitril, Methacrylnitril, (Meth)acrylsäureester, insbesondere Methyl(meth)acrylat. Weitere geeignete Monomere sind in Ullmann's Encyclopädie der Technischen Chemie, 4. Auflage, Band 19, Seiten 1 bis 30, angegeben. Das Polymer der Pfropfhülle ist vorzugsweise aus Acrylnitril und/oder Styrol und gegebenenfalls einem Vcrnetzer aufgebaut. Die Vernetzer für den Kern und die Pfropfhülle sind vorstehend beschrieben.

Man erhält die erfindungsgemäßen. Mikrosuspensions(pfropf)polymerisate vorzugsweise wie folgt: Das flüssige Monomer beziehungsweise flüssige Monomerengemisch wird mit Wasser und einem Schutzkolloid sowie gegebenenfalls einem Emulgator vermischt. Der Polymerisationsinitiator wird entweder ebenfalls schon jetzt oder erst nach dem Dispergieren des Monomeren oder auch nach dem Aufheizen der Dispersion zugegeben. Aus dem heterogenen Gemisch wird durch intensives Rühren bei hoher Geschwindigkeit eine Dispersion kleinster Monomertröpfchen in Wasser erhalten. Zum Mischen eignen sich Intensivmischer beliebiger Bauart. Die gewunschte Teilchengröße innerhalb des definitionsgemäßen Bereiches läßt sich beispielsweise dadurch ermitteln, daß man lichtmikroskopische Aufnahmen anfertigt und die Zahl der Teilchen, die einen bestimmten Durchmesser haben, durch Auszählen ermittelt.

Man startet die Polymerisation durch Erhitzen der Dispersion. Die Reaktion wird sodann unter mäßigem Rühren, bei dem die Tröpfchen nicht mehr weiter zerteilt werden, vorgenommen.

Während oder nach Beenden dieser Polymerisationsstufe kann gegebenenfalls die Reaktion mit den Monomeren, aus denen die entsprechenden Schalen entstehen, in an sich bekannter Weise fortgesetzt werden.

Die Dispergierung der Monomeren erfolgt in der Regel bei einer Temperatur von 0 bis 100°C, vorzugsweise bei Raumtemperatur. Das Verhältnis Monomer zu Wasser liegt in der Regel bei 75:25 bis 10:90 Gewichtsteile.

Die für die Stabilisierung der Dispersion eingesetzten Schutzkolloide sind wasserlösliche Polymere, die die Monomertröpfchen und die daraus gebildeten Polymerteilchen umhüllen und auf diese Weise vor der Koagulation schützen.

Als Schutzkolloide eignen sich Cellulosederivate wie Carboxymethylcellulose und Hydroxymethylcellulose, Poly-N-vinylpyrrolidon, Polyvinylalkohol und Polyethylenoxid, anionische Polymere, wie Polyacrylsäure und kationische Polymere wie Poly-N-vinylimidazol. Die Menge der Schutzkolloide beträgt vorzugsweise 0,1 bis 5 Gew.-%, bezogen auf die Gesamtmasse der (Kern)monomeren. Die Umsetzung kann zusätzlich in Gegenwart von Emul-gatoren durchgeführt werden. Dazu können, wie vorstehend bei den Emulsionspolymerisaten erläutert, niedermolekulare oberflächenaktive Verbindungen, beispielsweise vom Typ der anionischen oder kationischen Seifen eingesetzt werden. Insbesondere können Alkalisalze, speziell Natriumsalze von C₁₂₋₁₈-Paraffinsulfonsäure eingesetzt werden. Beim Einsatz von Emulgatoren beträgt der Anteil des Schutzkolloids vorzugsweise 0,1 bis 5 Gew.-% und des Emulgators 0,005 bis 5 Gew.-%, jeweils bezogen auf die Gesamtmasse der (Kern)monomeren. Durch Mitverwendung des Emulgators werden relativ kleine Teilchen gebildet.

Als Polymerisationsinitiatoren eignen sich Radikalbildner, insbesondere solche, die in den Monomeren löslich sind und vorzugsweise eine Halbwertzeit von 10 Stunden haben, wenn die Temperatur zwischen 25 und 150°C liegt. Beispiele geeigneter Initiatoren sind Peroxide wie Dilauroylperoxid, Peroxosulfate, tert.-Butylperpivalat, wie auch Azo-Verbindungen, beispielsweise Azodiisobutyronitril. Für die Herstellung des Pfropfkerns und der Pfropfschalen ist die Verwendung verschiedener Initiatoren möglich. Die Menge der Initiatoren beträgt im allgemeinen 0,05 bis 2,5 Gew.-%, bezogen auf die Menge der Monomeren.

Weiterhin enthält das Reaktionsgemisch vorzugsweise Puffersubstanzen, wie Na₂HPO₄/NaH₂PO₄ oder Na-Citrat/Citronensäure, um einen im wesentlichen konstant bleibenden pH-Wert einzustellen. Bei der Polymerisation, insbesondere der' schalenaufbauenden Monomere werden außerdem in der Regel Molekulargewichtsregler wie Ethylhexylthioglykolat oder Dodecylmercaptan zugefügt.

Die Polymerisationstemperatur der Kernmonomeren beträgt in der Regel 25 bis 150°C, bevorzugt 50 bis 120°C. Die Pfropfung der Schalen wird im allgemeinen bei einer Temperatur von 25 bis 150°C, bevorzugt 50 bis 120°C vorgenommen. Die unteren Grenzwerte dieser Bereiche entsprechen den Zerfallstemperaturen der jeweils verwendeten Polymerisationsinitiatoren.

Bei der erfindungsgemäßen Fällung der Mikrosuspensionspolymerisate aus einer dieser enthaltenen Suspension, insbesondere wäßrigen Suspension, wird die Suspension mit einer wie vorstehend beschrieben durch Emulsionspolymerisation hergestellten Polymerdispersion, insbesondere wäßrigen Polymerdispersion, versetzt. Dabei beträgt das Gewichtsverhältnis der Feststoffe in der Suspension und der Polymerdispersion 1:99 bis 99:1, vorzugsweise 1:99 bis 95:5, besonders bevorzugt 1:99 bis 90:10.

Durch Einsatz der Polymerdisersion des Emulsionspolymerisats wird das Mikrosuspensionspolymerisat aus der Suspension gefällt. Die Fällung kann verbessert oder beschleunigt werden, wenn zudem ein Fällmittel für die Polymerdispersion zugesetzt wird, wie es vorstehend beschrieben ist. Das Fällmittel wird dabei vorzugsweise als wäßrige Lösung eingesetzt. Die Konzentration des Fällmittels in der wäßrigen Phase des gesamten Reaktionsgemisches bei der Fällung beträgt vorzugsweise 0,01 bis 20 Gew.-%, besonders bevorzugt 0,05 bis 15 Gew.-%, insbesondere 0,1 bis 10 Gew.-%. Die Menge des Fällmittels (ohne den Wasseranteil berechnet) beträgt, bezogen auf die Feststoffe in der Suspension und der Polymerdispersion, vorzugsweise 0,01 bis 20 Gew.-%, besonders bevorzugt 0,05 bis 10 Gew.-%, insbesondere 0,1 bis 8 Gew.-%.

Die Temperatur bei der Fällung beträgt vorzugsweise 0 bis 150°C, besonders bevorzugt 10 bis 110°C, insbesondere 20 bis 100°C. Es kann auch bei einer Temperatur gefällt und dann bei einer anderen Temperatur weiterbehandelt werden.

Vorzugsweise wird die Fällung bei einem pH-Wert kleiner 7, vorzugsweise kleiner 6 durchgeführt. Dabei kann, wie vorstehend angegeben, die Suspension des Mikrosuspensionspolymerisats zunächst mit dem Fällmittel und dann mit der Polymerdispersion des Emulsionspolymerisats versetzt werden. Die Suspension des Mikrosuspensionspolymerisats kann auch zunächst mit der Polymerdispersion des Emulsionspolymerisats und anschließend mit dem Fällmittel versetzt werden. Die Abtrennung der gefällten Polymere vom wäßrigen Dispergiermittel kann durch beliebige geeignete Verfahren, wie Abfiltrieren oder Zentrifugieren erfolgen. Die Polymerisate können vor oder während der Abtrennung gewaschen werden. Auf diese Weise kann verhindert werden, daß sämtliche Hilfsstoffe, die bei der Herstellung der Mikrosuspensionspolymerisaten und Emulsionspolymerisaten eingesetzt wurden, in den gefällten Polymeren verbleiben. Dadurch ist es möglich, Mikrosuspensionspolymerisate zu erhalten, die weitgehend frei von storenden Hilfsstoffen sind, so daß sie vorteilhaft bei der Herstellung von Formmassen eingesetzt werden können. Es kommt so nicht zur Bildung von Stippen, Verfärbungen oder einer fruhzeitigen Alterung der Formmassen. Durch das Einverleiben der gefällten Polymerisate können Formmassen mattiert werden. Gleichzeitig kann die Zahigkeit der Formmassen verbessert werden. Die Formmassen weisen neben einer sehr guten Mattierung vorteilhafte mechanische Eigenschaften auf, die beispielsweise mit anorganischen Mattierungsmitteln nicht erreichbar sind. Soll die Formmasse mit einem Emulsionskautschuk, beispielsweise ASA oder ABS abgemischt werden, so kann die hierfür eingesetzte Kautschukdispersion bei der erfindungsgemäßen Fällung eingesetzt werden. Nach der Fällung wird dann das Emulsionspolymerisat gemeinsam mit dem Mikrosuspensionspolymerisat in die Formmassen eingearbeitet. Die Zugabe der Polymerdispersion des Emulsionspolymerisats kann dabei gleich in der Menge erfolgen, in der das Emulsionspolymerisat in der späteren Formmasse vorliegen soll.

Die Polymerisate, die nach dem erfindungsgemäßen Fällverfahren erhalten werden, können zur Modifizierung von Formmassen eingesetzt werden.

Die Erfindung betrifft auch eine Formmasse, enthaltend die Komponenten A bis D, deren Gesamtgewicht 100 Gew.-% ergibt,
a: 0,5 bis 99 Gew.-% mindestens eines Polymerisats, das durch das erfindungsgemäße Fällungsverfahren erhalten wird, wie es vorstehend beschrieben ist, als Komponente A,
b: 1 bis 99,5 Gew.-% einer Polymermatrix wie Polyester, Polyamid, Polycarbonat, Polyoximethylen, Polyvinylchlorid, vorzugsweise eines Polymers aus Styrul, α-Methylstyrol, Acrylnitril, Methacrylnitril, (Meth)acrylsäureester oder Gemischen davon als Komponente B,
c: 0 bis 50 Gew.-% faser- oder teilchenförmiger Füllstoffe oder deren Gemische als Komponente C, und
d: 0 bis 40 Gew.-% weiterer Zusatzstoffe als Komponente D.

Durch den Zusatz wird zum einen die Schlagzähigkeit verbessert, zum anderen erhält man, hervorgerufen durch diffuse Reflektion (Streuung) des Lichtes an den großen Partikeln, Formmassen mit reduziertem Oberflächenglanz und dementsprechend matte Formteile.

Die kautschukelastischen Partikel A werden in die Schmelze der Matrix B eingearbeitet, so daß die entstandene Formmasse aus der thermoplastischen Matrix B und den hierin dispergierten Polymerisaten A aufgebaut ist. Es hat sich als vorteilhaft erwiesen, die äußere Pfropfschale verträglich oder teilverträglich mit dem Matrixpolymer B zu machen. Dies wird oft erreicht, indem die Pfropfhülle aus dem gleichen oder möglichst ähnlichen Material besteht wie das Basispolymere. Beispiele für technisch wichtige Basispolymere sind Homopolymerisate des Styrols, des Methylacrylats, der (C₁-C₄)-Alkylmethacrylate und des Acrylnitrils, Copolymerisate dieser Monomeren und weiterer Comonomerer wie Methacrylnitril, d.h. diese Monomeren und Monomerengemische eignen sich nach Maßgabe des Aufbaus des Basispolymeren B zum Autbau der äußeren Pfropfschale.

Soll die äußere Schale beispielsweise verhältnismäßig hart sein, können sich Zwischenschalen aus einem weniger harten Material empfehlen. Ferner kann sich an die erste harte Pfropfschale eine Schale aus weichem Material, beispielsweise dem Kernmaterial, anschließen, wodurch sich die Eigenschaften der aus B und den Pfropfpolymerisat-Teilchen A hergestellten thermoplastischen Formmassen und der daraus hergestellten Formkörper häufig noch weiter verbessern lassen. Die Zusammenhänge zwischen der Natur beider Komponenten in den Formmassen und den Materialeigenschaften entsprechen denjenigen, wie sie für das Basismaterial und Pfropfpolymerisate bekannt sind, welche durch Emulsionspolymerisation hergestellt werden (vorzugsweise sind das Mikrosuspensionspolymerisat und das Emulsionspolymerisat aus den gleichen Monomeren in Kern und Schale aufgebaut).

Dies trifft auch für andere als die genannten Basismaterialien B zu, z.B. Copolymere von 1,1-Diphenylethylen, beispielsweise mit Styrol, Polyester, Polyamide, Polyvinylchlorid, Polycarbonate und Polyoximethylen. In diesen Fällen lassen sich verträgliche und teilverträgliche Pfropfschalen durch einige Vorversuche unschwer ermitteln.

Unter Verträglichkeit wird die Mischbarkeit auf molekularer Ebene verstanden. Ein Polymer gilt mit einem anderen als verträglich, wenn im festen Zustand die Moleküle beider Polymere statistisch verteilt sind, wenn also die Konzentration eines Polymers entlang eines beliebigen Vektors weder zu- noch abnimmt. Umgekehrt gilt es als unverträglich, wenn sich im festen Zustand zwei Phasen ausbilden, die durch eine scharfe Phasengrenze voneinander getrennt sind. Entlang eines die Phasengrenzfläche schneidenden Vektors nimmt die Konzentration des einen Polymers schlagartig von null auf 100% zu und die des anderen von 100% auf null ab.

Zwischen beiden Extremen gibt es fließende Übergänge. Sie sind dadurch gekennzeichnet, daß sich zwar eine Phasengrenze ausbildet, diese jedoch unscharf ist. An der Grenzfläche findet eine gegenseitige partielle Durchdringung der beiden Phasen statt. Die Konzentration des einen Polymers nimmt demnach entlang eines die Phasengrenze schneidenden Vektors mehr oder weniger schnell von null auf 100% zu und die des anderen Polymeren mehr oder weniger schnell von 100% auf null ab.

In diesem letzten Fall spricht man auch von Teilverträglichkeit, wie sie in technisch wichtigen Polymeren häufig auftritt.

Beispiele für teilverträgliche Polymere sind die Paare Polymethylmethacrylat/Copolymeres aus Styrol und Acrylnitril, Polymethylmethacrylat/Polyvinylchlorid und Polyvinylchlorid/Copolymeres aus Styrol und Acrylnitril sowie das dreiphasige System Polycarbonat/Polybutadien/Copolymeres aus Styrol und Acrylnitril (=Polycarbonat/ABS).

Näheres zum Begriff der Verträglichkeit von Polymeren und insbesondere dem sogenannten Löslichkeitsparameter als quantitativem Maß ist z.B. dem Polymer Handbook, Hrsg. J. Brandrup und E.H. Immergut, 3. Auflage, Wiley, New York 1989, S. VII/519-VII/550 zu entnehmen.

Zur Schlagzähmodifizierung verwendet man die erfindungsgemäßen Polymerisate in der Regel in Mengen von 1 bis 60 Gew.-%, vorzugsweise 2 bis 45 Gew.-%, bezogen auf die Menge ihrer Mischung mit dem Basispolymeren. Formkörper aus derartigen Mischungen sind stark lichtstreuend und daher besonders matt bis lichtundurchlässig.

Ist ein Mattierungseffekt bei noch hoher Transparenz erwünscht, empfehlen sich Konzentrationen von 2 bis 10 Gew.-% an den Pfropfpolymerisaten. Da bei diesen niedrigen Konzentrationen nur eine relativ geringe Erhöhung der Schlagzähigkeit bewirkt würde, kann man in diesem Falle herkömmliche, feinstteilige kautschukelastische Modifizierungsmittel in den hierfür üblichen Mengen, abzüglich der Menge des als Mattierungsmittel eingesetzten erfindungsgemäßen Pfropfpolymerisates, mitverwenden.

Außerdem können auch opake Polymere, die bereits schlagzäh machende Modifizierungsmittel erhalten, beispielsweise mit Polybutadien modifiziertes Styrol-Acrylnitril-Copolymeres (=ABS), mit Polyalkylacrylat modifiziertes Styrol-Acrylnitril-Copolymeres (=ASA), oder mit Ethylen-Propylen-Dien-Monomer (EPDM) modifiziertes Styrol-Acrylnitril-Copolymeres (=AES) durch Mitverwendung der erfindungsgemäßen Pfropfpolymerisate mattiert werden.

Die erfindungsgemäßen Partikel erzielen einen Mattierungseffekt, ohne die mechanischen Eigenschaften merklich zu beeinträchtigen, wie dies bei herkömmlichen Mattierungsmitteln wie Kreide oder Kieselgel zu beobachten ist.

Darüber hinaus besitzen die mit den erfindungsgemäßen Partikeln modifizierten Formmassen und die daraus hergestelten Formteile die Vorteile einer verbesserten Bedruckbarkeit und sogenannte anti-blocking-Eigenschaften, d.h. die von den Partikeln "angerauhten" Oberflächen der Formteile haften nicht aneinander. Dieser auf Adhäsion zurückzuführende Effekt ist beispielsweise von Kunststoffolien bekannt. Erfindungsgemäße, Partikel enthaltende, zu einem Stapel aufeinander geschichtete Folien lassen sich problemlos voneinander trennen, im Gegensatz zu Folien, die solche Partikel nicht enthalten.

Als Komponente C können die Formmassen faser- oder teilchenförmige Füllstoffe enthalten. Beispiele derartiger Füllstoffe sind Kunststoff- oder Glasfasern, wie E-, A- oder C-Glasfasern. Diese können mit einer Schlichte und einem Haftvermittler ausgerüstet sein. Weitere geeignete Füll- und Verstärkungsstoffe sind Glaskugeln, Mineralfasern, Whisker, Aluminiumoxidfasern, Glimmer, Quarzmehl und Wollastonit.

Die Formmassen können außerdem Zusatzstoffe aller Art als Komponente D enthalten. Genannt seien z.B. Gleit- und Entformungsmittel, Pigmente, Flammschutzmittel, Farbstoffe, Stabilisatoren und Antistatika, die jeweils in den üblichen Mengen zugesetzt werden.

Die Herstellung der erfindungsgemäßen Formmassen kann nach an sich bekannten Mischverfahren z.B. durch Einarbeiten des partikelförmigen Pfropfpolymerisates in das Basismaterial bei Temperaturen oberhalb des Schmelzpunktes des Basismaterials, insbesondere bei Temperaturen von 150 bis 350°C in üblichen Mischvorrichtungen erfolgen Aus den erfindungsgemäßen Formmassen lassen sich Folien, Fasern und Formkörper mit reduziertem Oberflächenglanz (Mattigkeit) und hoher Schlagzähigkeit herstellen. In den Folien, Fasern und Formkörpern tritt keine Entmischung der Polymerkomponenten ein.

Die Erfindung wird nachstehend anhand von Beispielen näher erläutert.

Folgende Dispersionen wurden hergestellt:

### Mikrosuspensionsdispersion D1

Folgender Ansatz wurde unter Stickstoff mit einem Dispermat 20 Minuten lang bei 7000 U/min gerührt. Der Dispermat war von VMA-Getzmann GmbH, D-51580 Reichshof hergestellt und mit einer 5 cm Zahnscheibe versehen.

### Ansatz:

| | |
|---|---|
| 1359,3 | g Wasser |
| 200,0 | g einer 10%igen Polyvinylalkohol (PVA) Lösung in Wasser (PVA: Hydrolysegrad 88% mol.-%, besitzt eine Viskosität als eine 4%ige Lösung in Wasser bei 20°C von 8 mPa/s nach DIN 53015 - Mowiol® 888 von Hoechst) |
| 980,0 | g n-Butylacrylat |
| 20,0 | g Dihydrodicyclopentadienylacrylat |
| 5,0 | g Dilaurylperoxid |

100 g dieser Dispersionen wurden in einem mäßig gerührten (250 U/min) Glaskolben unter Stickstoff bei 65°C vorgelegt und anpolymerisiert. Die Dosierung des Restes der Dispersionen erfolgte über einen Zeitraum von 100 Minuten. 60 Minuten lang wurde weiter polymerisiert. Danach wurden 254,1 g Wasser, 330,6 g Styrol und 110,2 g Acrylnitril zugegeben, wobei die Zugabe der Monomere als ein Zulauf von 40 Minuten erfolgte. Es wurde danach 120 Minuten weiter bei 65°C gerührt. Die mittlere Teilchengröße betrug 2,5 µm.

### Mikrosuspensionsdispersion D2

D2 wurde wie D1 hergestellt, jedoch wurde das Peroxid als eine 10%ige Lösung in Cyclohexan zu der emulgierten Mischung zugegeben.

### In Emulsion hergestellte Polymerdispersion - D3

Kautschukelastisches Pfropfpolymerisat (Kern vernetztes Polybutylacrylat, Schale Styrol-Acrylnitril-Copolymer), gewichtsmittlerer Teilchendurchmesser ca. 90 nm

### Herstellung eines Saatlatex

Zur Herstellung eines Saatlatex wurden 16 g Butylacrylat und 0,4 g Tricyclodecenylacrylat in 150 g Wasser unter Zusatz von 1 g des Natriumsalzes einer C₁₂-C₁₈-Paraffinsulfonsäure, 0,3 g Kaliumpersulfat, 0,3 g Natriumhydrogencarbonat und 0,15 g Natriumpyrophosphat unter Rühren auf 60°C erwärmt. 10 Minuten nach dem Anspringen der Polymerisationsreaktion wurden innerhalb von 3 Stunden eine Mischung aus 82 g Butylacrylat und 1,6 g Tricyclodecenylacrylat zugegeben. Nach Beendigung der Monomerzugabe ließ man noch eine Stunde nachreagieren. Der erhaltene Latex hatte einen Feststoffgehalt von 40% und eine gewichtsmittlere Teilchengröße d₅₀ von 76nm. Die Teilchengrößenverteilung war eng (Quotient Q = 0,29).

### Herstellung des Pfropfpolymerisates

150 g des Polybutylacrylat-Saatlatex wurden mit 40 g einer Mischung aus Styrol und Acrylnitril (Gewichtsverhältnis 75:25) und 60 g Wasser gemischt und unter Rühren nach Zusatz von weiteren 0.03 g Kaliumpersulfat und 0,05 g Lauroylperoxid 4 Stunden auf 65°C erhitzt. Die erhaltene Polymerdispersion wurde als solche weiterverarbeitet. Der Pfropfgrad des Pfropfmischpolymerisats betrug 40%, und die Teilchen hatten einen gewichtsmittleren Teilchendurchmesser d₅₀ von 90 nm.

### In Emulsion hergestellte Polymerdispersion - D4

Kautschukelastisches Pfropfpolymeres, auf herkömmliche Weise durch Emulsionspolymerisation hergestellt.
Typ 60% n-Butylacrylat, vernetzt mit Tricyclodecenylacrylat (Kern)/30% Styrol + 10% Acrylnitril (Schale), mittlerer Teilchendurchmesser D₅₀ ca. 0,5 µm.

Es wurden die nachstehenden Fällversuche durchgeführt, in dem die angegebenen Lösungen zusammengegeben wurden. Wenn nicht anders angegeben war die MgSO₄-Lösung 1 %ig in Wasser.

### Vergleichsbeispiel V1

2 Gewichtsteile MgSO₄-Lösung in Wasser + 1 Gewichtsteil D2 bei 23°C.
Ergebnis: Keine Fällung.

### Beispiel 2

1 Gewichtsteil D2 und 1 Gewichsteil D3 bei 23°C.
Ergebnis: praktisch vollständig ausgefällt.

### Beispiel 3

1 Gewichtsteil D2 + 1 Gewichtsteil D3 + 2 Gewichtsteile MgSO₄-Lösung
Ergebnis: praktisch vollständige Fällung bei 23°C
Auf 85°C erhitzt für 30 Minuten.
Ergebnis: Vollständig ausgefällt.

### Beispiel 4

3 Gewichtsteile MgSO₄-Lösung bei 85°C + 1 Gewichtsteil einer Mischung aus D2 und D3 (2:1).
Ergebnis: praktisch vollständig ausgefällt, überstehende Lösung leicht trüb.

### Beispiel 5

4 Gewichtsteile MgSO₄-Lösung bei 85°C + einer Mischung aus 1 Gewichtsteil D2 und 1 Gewichtsteil D4.
Ergebnis: Vollständig ausgefällt.

### Beispiel 6

75 Gewichtsteile D3 + 100 Gewichtsteile D1 bei 85°C.
Ergebnis: Fällt aus, überstehende Lösung jedoch trüb.

### Beispiel 7

12.5 Gewichtsteile D3 + 100 Gewichtsteile D1 + 50 Gewichtsteile einer MgSO₄-
Lösung (2%ig) bei 85°C.
Ergebnis: Fällt aus, überstehende Lösung fast klar.

### Beispiel 8

25 Gewichtsteile D3 + 100 Gewichtsteile D1 + 50 Gewichtsteile einer MgSO₄-
Lösung (2%ig) bei 85°C
Ergebnis: Fällt aus, überstehende Lösung fast klar.

### Beispiel 9

50 Gewichtsteile D3 + 100 Gewichtsteile D1 + 50 Gewichtsteile einer MgSO₄-Lösung (2%ig) bei 85°C
Ergebnis: Fällt aus, überstehende Lösung klar.

### Beispiel 10

75 Gewichtsteile D3 + 100 Gewichtsteile D1 + 50 Gewichtsteile MgSO₄-Lösung (2%ig) bei 85°C.
Ergebnis: Fällt aus, überstehende Lösung klar.

### Einarbeitung in Thermoplasten

Nach Trocknung konnten die ausgefällten Pulver in ein Polystyrol-Acrylnitril-Copolymer mit Hilfe eines Extruders eingearbeitet werden.

## Patentansprüche

1. Verfahren zum Fällen von Mikrosuspensionspolymerisaten, die aus Polymeren bestehen, die eine Glasübergangstemperatur (T_{g}) von weniger als 0°C besitzen, oder in denen mehrere Phasen vorliegen, in denen einige Phasen eine Glasübergangstemperatur von unterhalb 0°C aufweisen aus einer diese enthaltenden Suspension, **dadurch gekennzeichnet, daß** die Suspension mit einer durch Emulsionspolymerisation hergestellten Polymerdispersion versetzt wird.

2. Verfahren nach Anspruch 1, **dadurch gekennzeichnet, daß** die Suspension zusätzlich mit einem Fällmittel für die Polymerdispersion versetzt wird.

3. Verfahren nach Anspruch 2, **dadurch gekennzeichnet, daß** das Fällmittel ein Salz ist, das ein mehrwertiges Kation enthält.

4. Verfahren nach Anspruch 2, **dadurch gekennzeichnet, daß** das Fällmittel eine Säure ist.

5. Verfahren nach einem der Ansprüche 2 bis 4, **dadurch gekennzeichnet; daß** das Fällmittel als wäßrige Lösung eingesetzt wird.

6. Verfahren nach einem der Ansprüche 1 bis 5, **dadurch gekennzeichnet, daß** das Gewichtsverhältnis der Feststoffe in der Suspension und der Polymerdispersion 1 : 99 bis 99 : 1 beträgt.

7. Verfahren nach einem der Ansprüche 1 bis 6, **dadurch gekennzeichnet, daß** die Fällung bei einem pH-Wert kleiner 6 durchgeführt wird.

8. Verfahren nach einem der Ansprüche 1 bis 7, **dadurch gekennzeichnet, daß** das Emulsionspolymerisat aus den gleichen Monomeren aufgebaut ist, die auch zur Herstellung der Mikrosuspensionspolymerisate eingesetzt werden.

9. Polymerisat, herstellbar nach einem Verfahren gemäß einem der Ansprüche 1 bis 8

10. Verwendung von Polymerisaten nach Anspruch 9 zur Modifizierung von Formmassen.

11. Formmasse, enthaltend die Komponenten A bis D, deren Gesamtgewicht 100 Gew.-% ergibt,
a: 0,5 bis 99 Gew.-% eines Polymerisats gemäß Anspruch 9 als Komponente A.
b: 1 bis 99,5 Gew.-% einer Polymermatrix als Komponente B,
c: 0 bis 50 Gew.-% faser- oder teilchenförmige Füllstoffe oder deren Gemische als Komponente C, und
d: 0 bis 40 Gew.-% weiterer Zusatzstoffe als Komponente D.

## Claims

1. A process for precipitating microsuspension polymers comprising polymers having a glass transition temperature (T_{g}) of less than 0°C, or in which there are two or more phases, some of which have a glass transition temperature of below 0°C, from a suspension comprising them, which comprises adding a polymer dispersion prepared by emulsion polymerization to the suspension.

2. A process as claimed in claim 1, wherein a precipitant for the polymer dispersion is also added to the suspension.

3. A process as claimed in claim 2, wherein said precipitant is a salt which comprises a polyvalent cation.

4. A process as claimed in claim 2, wherein said precipitant is an acid.

5. A process as claimed in any of claims 2 to 4, wherein said precipitant is used in the form of an aqueous solution.

6. A process as claimed in any of claims 1 to 5, wherein the weight ratio of the solids in the suspension and the polymer dispersion is from 1:99 to 99:1.

7. A process as claimed in any of claims 1 to 6, wherein the precipitation is conducted at a pH of less than 6.

8. A process as claimed in any of claims 1 to 7, wherein the emulsion polymer is composed of the same monomers as are used to prepare the microsuspension polymers as well.

9. A polymer preparable by a process as claimed in any of claims 1 to 8.

10. The use of a polymer as claimed in claim 9 to modify molding compounds.

11. A molding compound comprising the components A to D, whose overall weight is 100% by weight:
a: from 0.5 to 99% by weight of a polymer as claimed in claim 9, as component A,
b: from 1 to 99.5% by weight of a polymer matrix as component B,
c: from 0 to 50% by weight of fibrous or particulate fillers or mixtures thereof, as component C, and
d: from 0 to 40% by weight of further additives as component D.

## Revendications

1. Procédé pour la précipitation de polymérisats en microsuspension, qui consistent en polymères qui possèdent une température de transition vitreuse (T_{g}) inférieure à 0°C, ou dans lesquels sont présentes plusieurs phases, dans lesquelles certaines phases présentent une température de transition vitreuse inférieure à 0°C à partir d'une suspension contenant celles-ci, **caractérisé par le fait que** la suspension est additionnée d'une dispersion de polymères préparée par polymérisation en émulsion.

2. Procédé selon la revendication 1, **caractérisé par le fait que** la suspension est en outre additionnée d'un agent de précipitation pour la dispersion de polymères.

3. Procédé selon la revendication 2, **caractérisé par le fait que** l'agent de précipitation est un sel qui contient un cation plurivalent.

4. Procédé selon la revendication 2, **caractérisé par le fait que** l'agent de précipitation est un acide.

5. Procédé selon l'une des revendications 2 à 4, **caractérisé par le fait que** l'agent de précipitation est utilisé sous forme de solution aqueuse.

6. Procédé selon l'une des revendications 1 à 5, **caractérisé par le fait que** le rapport pondéral des solides dans la suspension et la dispersion de polymères est de 1:99 à 99:1.

7. Procédé selon l'une des revendications 1 à 6, **caractérisé par le fait que** la précipitation est effectuée à un pH inférieur à 6.

8. Procédé selon l'une des revendications 1 à 7, **caractérisé par le fait que** le polymérisat en émulsion est élaboré à partir des mêmes monomères que ceux également utilisés pour la préparation des polymérisats en microsuspension.

9. Polymérisat, pouvant être préparé par un procédé selon l'une des revendications 1 à 8.

10. Utilisation de polymérisats selon la revendication 9 pour la modification de matières à mouler.

11. Matière à mouler, contenant les composants A à D, dont le poids total représente 100% en poids,
a: 0,5 à 99 % en poids d'un polymérisat selon la revendication 9 en tant que composant A,
b: 1 à 99,5 % en poids d'une matrice polymère en tant que composant B,
c: 0 à 50 % en poids de solides sous forme de fibres ou de particules, ou de leurs mélanges en tant que composant C, et
d: 0 à 40 % en poids d'autres additifs en tant que composant D.
